# FASCICULE DE BREVET EUROPEEN

(11) **EP 2 719 667 B1**
(45) Date de publication et mention de la délivrance du brevet: **13.03.2019**
(21) Numéro de dépôt: 13187546.0
(22) Date de dépôt: 07.10.2013
(51) Int. Cl.: C02F 1/28, C02F 101/30, C02F 1/72, C02F 1/78, C02F 1/32, C02F 3/00, C02F 1/52

(54) **Procédé de traitement d'eaux en vue d'en abattre l'effet perturbateur endocrinien mettant en oeuvre un organisme vivant**
Verfahren der Wasseraufbereitung zur Abschwächung eines endokrinen Disruptoren-Effekts im Wasser mit Hilfe eines lebenden Organismus
Method for treating water in order to reduce its endocrine disrupting effect by means of a living organism

(30) Priorité: 09.10.2012 FR 1259608
(43) Date de publication de la demande: 16.04.2014
(73) Titulaire: Veolia Water Solutions & Technologies Support, 94417 Saint-Maurice Cedex (FR)
(72) Inventeur: Gaid, Abdelkader, 75014 PARIS (FR); Sauvignet, Philippe, 35460 SAINT-ETIENNE EN COGLES (FR)
(74) Mandataire: Vidon Brevets & Stratégie

(56) Documents cités:
- DE-A1- 3 714 612
- FR-A1- 2 934 586
- FR-A1- 2 935 697
- JP-A- S63 142 259
- JP-A- 2003 066 029
- US-A1- 2002 104 787
- US-B1- 7 648 637
- ZHENGFANG YE ET AL: "Acute toxicity evaluation of explosive wastewater by bacterial bioluminescence assays using a freshwater luminescent bacterium,sp. Nov", JOURNAL OF HAZARDOUS MATERIALS, ELSEVIER, AMSTERDAM, NL, vol. 186, no. 2, 5 décembre 2010 (2010-12-05), pages 1351-1354, XP028363400, ISSN: 0304-3894, DOI: 10.1016/J.JHAZMAT.2010.12.013 [extrait le 2010-12-10]

## Description

### 1. Domaine de l'invention

Le domaine de l'invention est celui du traitement des eaux résiduaires qu'elles soient d'origine urbaine ou industrielle.

Plus précisément, l'invention concerne un procédé de traitement des eaux en vue d'en réduire la teneur en polluants susceptibles d'induire un effet perturbateur endocrinien ou d'avoir un effet toxique et/ou génotoxique.

### 2. Art antérieur

Les procédés de traitement des eaux usées urbaines et/ou industrielles permettent de dégrader l'essentiel de la pollution organique contenue dans celles-ci. Toutefois, la plupart des procédés actuels ont pour objectif de diminuer la concentration des composés organiques divers contenus dans ces eaux, sans prendre en compte la production éventuelle de sous-produits de dégradation. Les composés organiques résiduels et de tels sous-produits de dégradation peuvent avoir des effets biologiques additifs, synergiques ou antagonistes qui ne sont pas reflétés par une simple valeur de leur concentration dans l'eau.

Certains de ces composés organiques appelés « perturbateurs endocriniens » ou « substances à effet perturbateur endocrinien », se sont révélés toxiques pour les espèces vivantes exposées, notamment sur les organismes aquatiques des milieux récepteurs des rejets de station d'épuration. Ils sont constitués de molécules naturelles ou fabriquées par l'homme qui possèdent des propriétés hormono-mimétiques : elles se lient à des récepteurs d'hormones naturelles et interfèrent ainsi avec un ou plusieurs processus hormonaux contrôlant par exemple le comportement, la synthèse de protéines, la sécrétion, le transport de molécules, la reproduction et d'autres processus vitaux. Leurs effets toxiques, voire génotoxiques, peuvent impacter sur l'organisme d'un individu exposé mais également sur la descendance d'un individu exposé.

Dans un souci de préservation de l'environnement, et corollairement de préservation de la santé humaine, l'abattement de cet effet perturbateur endocrinien et/ou des effets toxique et génotoxique dans les eaux urbaines et/ou industrielles est devenu un objectif important des procédés de traitement de celles-ci.

L'un des objectifs de ces traitements est donc l'élimination de la matière organique. Dans le cadre de processus de traitement généralement mis en oeuvre en fin de filières, en plus de l'élimination de microorganismes pathogènes, l'élimination de ces substances organiques est poussée le plus loin possible.

L'état de la technique propose différents procédés de traitement des eaux mettant en oeuvre des composés chlorés, de l'ozone, des rayonnements ultraviolets... En particulier il est connu de mettre en oeuvre une étape d'adsorption, par du charbon activé dit charbon actif ou une étape d'adsorption et/ou échange (échange d'ions) à l'aide de résines synthétiques ou d'éléments naturels comme les zéolithes, des composés organiques contenus dans l'eau à traiter. Ces traitements sont parfois combinés à une étape d'oxydation des composés organiques par l'ozone, le peroxyde d'hydrogène ou le rayonnement UV afin de faciliter leur dégradation. On connaît la demande de brevet américaine US 2002/104787 A1 portant notamment sur un système de contrôle d'une installation de potabilisation de l'eau. Le problème que cette technique vise à résoudre est de pouvoir optimiser la quantité de matériaux injectés dans l'eau à traiter afin de limiter la formation de trihalométhane, un composé carcinogène.

L'efficacité de ces procédés sur l'abattement des perturbateurs endocriniens dans l'eau est évaluée par des mesures en laboratoire, complexes et particulièrement onéreuses. Outre le coût de ces analyses, les résultats de ces analyses ne sont pas disponibles avant au moins une semaine. Ce délai particulièrement long interdit toute réactivité de la part des opérateurs sur la chaine du procédé de traitement de l'eau, et notamment d'ajuster la dose de réactifs à injecter dans l'eau à traiter à la qualité de l'eau entrante. Par conséquent, et en raison du principe de précaution, les réactifs adsorbants sont injectés à forte dose ce qui augmente considérablement le coût du procédé de traitement de l'eau.

De plus, ces analyses ne peuvent se faire en continu : seuls des échantillons prélevés à intervalles réguliers subissent ces tests. L'information obtenue n'est alors pas complètement fiable puisqu'elle ne reflète qu'une situation à un temps donné et en aucun cas la réalité de la qualité des eaux en continu.

Un autre inconvénient de cette technique est que seuls quelques perturbateurs endocriniens et composés toxiques et/ou génotoxiques sont testés. Or, il existe des milliers de molécules impliquées dans ces phénomènes, pouvant impacter la santé humaine et l'environnement, et toutes ne sont pas répertoriées. Par ailleurs, certains composés peuvent ne pas avoir d'impact sur l'organisme ou l'environnement seuls mais avoir un effet particulièrement délétère sur la santé ou l'environnement lorsqu'ils se trouvent en présence d'autres composés. Les analyses en laboratoire, dont le but est de déterminer la présence et la concentration par composé d'un effet perturbateur endocrinien et/ou toxique et/ou génotoxique, ne permettent donc pas de mettre en évidence cet effet synergique.

C'est dans cet objectif que des méthodes alternatives, basées sur l'observation d'organismes animaux vivant dans ces eaux, ont été mises en oeuvre. Certaines de ces méthodes se fondent sur l'observation du comportement des animaux (comme les daphnies et les truitelles) et de leurs modifications pour en déduire un effet perturbateur.

On connaît en outre la demande de brevet allemand DE-3714612-A1 qui porte notamment sur une souche de bactéries luminescentes *Klebsiella panticola* pDB 101 K 70 B et leur utilisation à des fins analytiques, notamment pour évaluer la qualité des eaux usées et des systèmes d'épuration. Ce document explique que les bactéries luminescentes utilisent les nutriments qu'elles trouvent dans le milieu afin de produire de la lumière. La présence de matériaux toxiques inhibe l'émission de lumière par les bactéries et permet de détecter leur présence.

On connaît également la publication de Zhenfang et al (Zhenfang et al, Journal of Hazardous Material, 186 (2011) 1351-1354) qui décrit notamment l'utilisation de bactéries photoluminescentes, *V. qinghaiensis* et *P. phosphoreum*, qui décrit une méthode basée sur le principe de la mesure de la réduction de la luminescence émise par les bactéries lorsqu'elles sont en présence de substances toxiques. Les résultats sont pondérés par l'analyse d'un échantillon témoin en parallèle.

D'autres méthodes utilisent le comptage de population pour mettre en évidence une mortalité anormale et mettre en relation cette observation avec une éventuelle toxicité présente dans l'eau. Toutefois, ces méthodes restent complètement aléatoires car différents paramètres peuvent intervenir et tous ne sont pas maitrisés. Ils ne permettent donc pas de mettre clairement en relation les observations faites sur les animaux et la présence éventuelle d'un composé polluant dans l'eau. En sus, ces types de tests comportent une fréquence très importante de « faux positifs ». Ils ne permettent pas non plus d'exploiter simplement les résultats de ces observations selon une simple loi dose-réponse. De plus, ces méthodes sont coûteuses car elles nécessitent une surveillance constante des organismes.

### 3. Objectifs de l'invention

L'invention a notamment pour objectif de pallier ces inconvénients de l'art antérieur.

Plus précisément, un objectif de l'invention est de fournir, dans au moins un mode de réalisation, un procédé de traitement de l'eau permettant d'éliminer, ou à tout le moins de diminuer, la présence des composés ayant un effet perturbateur endocriniens et/ou toxique et/ou génotoxique dans l'eau traitée.

Un autre objectif de l'invention est de mettre en oeuvre, dans au moins un mode de réalisation, un procédé qui permette d'ajuster rapidement, en quelques dizaines de minutes, voire instantanément, la dose de réactifs injectés.

L'invention a encore pour objectif de mettre en oeuvre, dans au moins un mode de réalisation, un procédé de traitement de l'eau qui prenne en compte la situation réelle de la pollution de l'eau.

L'invention a également pour objectif de mettre en oeuvre, dans au moins un mode de réalisation, un procédé de traitement de l'eau qui soit simple à mettre en oeuvre.

### 4. Exposé de l'invention

Ces objectifs, ainsi que d'autres qui apparaîtront par la suite, sont atteints à l'aide d'un procédé de traitement d'eau à traiter en vue d'en réduire la teneur en polluants susceptibles d'induire un effet perturbateur endocrinien et/ou un effet toxique et/ou génotoxique, ledit procédé comprenant :
- une étape d'adsorption comprenant une mise en contact de ladite eau à traiter avec une quantité d'au moins un réactif adsorbant produisant un mélange d'eau et de réactif adsorbant ;
- une étape de séparation liquide-solide dudit mélange produisant de l'eau traitée et des boues.

Selon l'invention, ladite étape d'adsorption est précédée et/ou ladite étape de séparation liquide solide est suivie d'une étape de mise en contact de ladite eau à traiter et/ou de ladite eau traitée respectivement avec au moins un organisme vivant aquatique, ledit organisme aquatique vivant est un organisme aquatique génétiquement modifié, se trouve à l'état embryonnaire et appartient au groupe comprenant les poissons et les amphibiens ; et la valeur d'au moins une propriété dudit organisme vivant est corrélée à la concentration en lesdits polluants de ladite eau à traiter et/ou de ladite eau traitée, ladite propriété est un signal visuel de fluorescence émis par ledit organisme vivant dont l'intensité est quantifiable et corrélée à la concentration de ladite eau à traiter en lesdits polluants. En outre, ledit procédé comprend :
une étape d'évaluation en continu de la valeur de ladite propriété par mesure de la fluorescence émise par les organismes vivants aquatiques ;
une étape d'ajustement de la quantité de réactif adsorbant mélangé à l'eau au cours de ladite étape d'adsorption en fonction de ladite valeur obtenue à ladite étape d'évaluation.

Ainsi, l'invention repose sur une approche tout à fait nouvelle et originale consistant à associer une étape d'adsorption des composés organiques ayant un effet toxique et/ou génotoxique et/ou perturbateur endocrinien à une étape de détection en continu et en temps réel de ces composés par la mise en contact de l'eau traitée ou à traiter avec des organismes vivants. L'utilisation d'organismes vivants pour détecter la présence d'au moins un composé ayant un effet perturbateur endocrinien et/ou toxique et/ou génotoxique permet de détecter la présence d'un tel composé, même à faible concentration. Elle permet également de mettre en évidence un possible effet toxique ou perturbateur qui résulterait de la synergie de différents composés, ce qui n'est pas permis par les analyses en laboratoires actuelles. Enfin, elle permet également de fournir des résultats sensibles, fiables, rapides et reflétant la réalité de la pollution de l'eau de manière prédictive.

Cette étape de détection de la pollution par les organismes vivants a pour objet, lorsqu'elle est placée en amont de l'étape d'adsorption, de détecter la présence de composés polluants ayant un possible effet perturbateur endocrinien et/ou toxique et/ou génotoxique. Elle permet également de commander l'injection de réactifs adsorbants et leur quantité dans l'eau à traiter et par conséquent d'ajuster automatiquement cette quantité en cas notamment de survenue d'une importante pollution de l'eau à traiter. Il n'est donc plus nécessaire d'injecter systématiquement des fortes doses de réactif adsorbant dans l'eau à traiter ce qui permet de réaliser d'importantes économies. En revanche, en cas de forte pollution de l'eau par des composés ayant un effet perturbateur endocrinien et/ou toxique et/ou génotoxique, le procédé selon l'invention permet d'augmenter la quantité de réactifs à injecter en conséquence. Le procédé selon l'invention permet d'améliorer la réactivité du procédé de traitement des eaux aux variations de qualité de l'eau entrant dans l'installation.

Lorsque l'étape de détection est placée en sortie de l'installation de traitement des eaux, elle permet d'évaluer l'efficacité du procédé de traitement de l'eau et de sa capacité à éliminer, ou à tout le moins à diminuer, la concentration en composés perturbateurs endocriniens et/ou toxiques et/ou génotoxiques. Elle permet également de mettre en place une boucle de régulation de la quantité de réactifs adsorbants injectés dans les eaux à traiter. En effet, en cas d'importante pollution de l'eau, la quantité de réactifs adsorbants peut être sous-évaluée et des composés ayant un effet perturbateur endocrinien et/ou toxique et/ou génotoxique peuvent subsister. La détection de cette anomalie permet de corriger automatiquement et rapidement la quantité de réactifs adsorbants à injecter dans les eaux traitées. Elle permet également de déterminer quand diminuer à nouveau les doses de réactifs adsorbants lorsque le pic de pollution est passé.

Le procédé selon l'invention offre donc une solution pour le traitement des eaux résiduaires : il permet d'une part de traiter l'eau et d'en éliminer, ou à tout le moins d'en diminuer, la concentration en composés nocifs pour la santé humaine et l'environnement grâce à la mise en oeuvre d'une étape d'adsorption de ces composés, et d'autre part d'évaluer l'efficacité du procédé mis en oeuvre et de réguler plus finement la dose de réactifs adsorbants injectés dans l'eau à traiter.

Ainsi, le procédé selon l'invention permet une plus grande réactivité face aux variations de la qualité de l'eau entrante, une meilleure optimisation des quantités de réactifs adsorbants injectés en fonction de la qualité de l'eau entrante et une plus grande réactivité face aux variations de la qualité de l'eau entrante.

On peut citer à tire d'exemple de réactifs adsorbant convenant pour la mise en oeuvre de l'invention le Charbon Actif en Poudre (CAP), les résines synthétique, les zéolithes .... De préférence, l'adsorbant est du CAP.

Dans une variante intéressante de l'invention, le procédé comprend en outre une étape d'oxydation chimique dans laquelle l'injection d'un oxydant chimique se fait en amont ou au cours de l'étape d'adsorption, la quantité dudit oxydant chimique à injecter étant déterminée par ladite étape d'évaluation en continu de la valeur de ladite propriété. On peut citer à titre d'exemple d'oxydants chimiques convenant pour la mise en oeuvre de l'invention l'ozone, l'air, le peroxyde d'hydrogène, De préférence, l'oxydant utilisé est de l'ozone seul ou combiné à une addition de peroxyde d'hydrogène (H₂O₂). Un autre mode de réalisation comprend le pré-traitement de l'eau à traiter par des rayonnements UV combinés avec une injection d'ozone, de peroxyde d'hydrogène ou d'oxyde de titane (TiO₂).

Les oxydants comme l'ozone et le peroxyde d'hydrogène sont connus pour être « nocifs » pour les organismes vivants. Pourtant les inventeurs ont constaté que le couplage oxydation - adsorption permet de produire une eau sans résidu d'oxydant. Par conséquent, cette étape d'oxydation n'est pas dangereuse pour les organismes vivants. L'oxydant peut ainsi être injecté soit directement dans la cuve d'adsorption soit en amont de la cuve via un mélangeur statique.

Dans un mode de réalisation avantageux, la quantité de réactif adsorbant mélangée à l'eau au cours de ladite étape d'adsorption est proportionnelle à ladite valeur obtenue à ladite étape d'évaluation. Ce mode de réalisation permet d'ajuster très exactement la quantité de réactifs adsorbants aux variations survenant dans la qualité de l'eau à traiter. D'importantes économies sur la quantité de réactifs utilisée sont ainsi réalisées.

Dans un autre mode de réalisation intéressant, l'injection dudit réactif adsorbant dans ladite eau à traiter est déclenchée lorsque ladite valeur obtenue à ladite étape d'évaluation devient supérieure ou égale à un seuil prédéterminé.

Ce mode de réalisation permet également d'adapter la quantité de réactifs adsorbants et/ou d'oxydant chimique à injecter en fonction de la qualité de l'eau à traiter. La fixation d'un seuil de déclenchement de l'injection pourrait être corrélée à l'existence d'une norme définissant un seuil de pollution acceptable. Il serait aussi possible de fixer un seuil de déclenchement en fonction du seuil d'impact physiologique avéré sur la spéciation sexuée des poissons ou bien la métamorphose des batraciens.

Ladite étape d'ajustement de la quantité de réactif adsorbant mélangé à l'eau au cours de ladite étape d'adsorption est réalisée en fonction de ladite valeur obtenue à ladite étape d'évaluation résultant de la mise en contact de ladite eau à traiter avec ledit organisme vivant.

Cette caractéristique permet de réguler la dose de réactifs adsorbants et chimiques à injecter dans l'eau en fonction de la qualité de l'eau entrant dans l'installation de traitement de l'eau. Elle est donc particulièrement importante lorsque l'étape de détection des composés ayant un effet perturbateur endocrinien et/ou toxique et/ou génotoxique par l'au moins un organisme vivant se fait en amont de l'étape d'adsorption de ces composés.

Avantageusement, le procédé selon l'invention comprend une étape de contrôle de la qualité de ladite eau traitée produite, ladite étape de contrôle comprenant une sous-étape de détermination d'une information représentative de la qualité de ladite eau traitée en fonction de ladite valeur obtenue à ladite étape d'évaluation résultant de la mise en contact de ladite eau traitée avec ledit organisme vivant.

Le procédé selon l'invention permet également d'évaluer en continu l'eau traitée afin d'évaluer sa qualité en sortie d'installation et les performances du procédé mis en oeuvre. Ces données sur la qualité sont importantes pour un suivi qualité régulier des installations et une évaluation de la performance du procédé mis en oeuvre.

Ladite propriété est un signal visuel émis par ledit organisme vivant dont l'intensité est quantifiable et corrélée à la concentration de ladite eau à traiter en lesdits polluants.

La mesure d'un signal visuel et la quantification de son intensité peuvent être aisément mises en oeuvre par des dispositifs existants, particulièrement fiables. Ainsi, le procédé selon l'invention permet d'exprimer la pollution de l'eau en un signal clairement identifiable et quantifiable.

Ledit signal visuel est la fluorescence.

Dans ce mode de réalisation, la fluorescence pourra être émise par l'au moins un organisme aquatique dont le génome aura été modifié pour réagir à la présence d'au moins un composé perturbateur endocrinien et/ou toxique et/ou génotoxique. L'émission de la fluorescence peut être soit proportionnelle à la concentration en composé perturbateur endocrinien et/ou toxique et/ou génotoxique, soit corrélable à la présence d'un tel composé sans refléter sa concentration réelle dans l'eau. De plus, cette fluorescence peut être lié à un seuil avéré dit d'impact physiologique soit sur la spéciation sexuée des poissons (tests OCDE 229 + 230) soit sur la métamorphose des batraciens (TEST OCDE 231).

Dans un mode de réalisation préféré, ladite ou lesdites étapes d'évaluation sont mises en oeuvre in situ. Ainsi le procédé selon l'invention peut facilement s'implémenter sur des installations préexistantes. Par ailleurs, le risque de dissémination d'organismes aquatiques génétiquement modifiés est ainsi supprimé.

Ledit organisme aquatique est un organisme animal aquatique génétiquement modifié.

Ledit organisme aquatique se trouve à l'état embryonnaire. De tels organismes aquatiques embryonnaires présentent l'avantage d'être en partie transparents, ce qui facilite la lecture de leur fluorescence lorsqu'elle se produit. L'utilisation d'organisme aquatique au stade embryonnaire permet notamment de détecter les composés ayant un effet délétère sur les foetus et les embryons uniquement. Cela permet également d'observer le développement des embryons soumis à ces polluants et de relier les niveaux de pollution à des effets précis sur l'organisme. De préférence, l'organisme aquatique au stade embryonnaire permet la détection de n'importe quel composé nocif, quelque soit sa concentration dans l'eau. Ceci constitue ainsi une alternative éthique à l'expérimentation animale, les embryons étant dépourvus de cortex et ne ressentant donc pas la douleur. Cet aspect revêt une grande importance lorsqu'il s'agit de détecter la présence d'un perturbateur endocrinien. En effet, ces composés présentent la particularité d'avoir un impact sur le développement et le fonctionnement des organismes vivants même à très faible dose. De plus, la détection revêt un caractère prédictif des malformations éventuelles futures au stade adulte grâce à la connaissance du développement physiologiques des embryons.

Ledit organisme vivant appartient au groupe comprenant les poissons et les amphibiens. En effet, ces organismes semblent être particulièrement sensibles aux perturbateurs endocriniens. Il a déjà été observé un phénomène de réversion sexué sur les larves de batraciens.

Une installation de traitement d'eau pour la mise en oeuvre d'un procédé selon l'invention comprend :
- une zone de traitement par adsorption comprenant des moyens d'injection d'au moins un réactif adsorbant dans ladite eau à traiter ;
- une zone de séparation liquide-solide dont l'entrée communique avec la sortie de ladite zone de traitement par adsorption, ladite zone de séparation liquide-solide comprenant des moyens d'évacuation d'une eau traitée et des moyens d'extraction de boues ;
- une zone de mise en contact de ladite eau à traiter et/ou de ladite eau traitée avec au moins un organisme vivant aquatique, la valeur d'au moins une propriété dudit organisme vivant étant corrélée à la concentration en lesdits polluants de ladite eau à traiter et/ou de ladite eau traitée ;
- des moyens d'évaluation en continu de la valeur de ladite propriété ;
- des moyens d'ajustement de la quantité de réactif adsorbant injectée dans ladite eau à traiter par lesdits moyens d'injection en fonction de ladite valeur obtenue par lesdits moyens d'évaluation.

Dans une variante, l'installation selon l'invention comprend en outre des moyens d'oxydation chimique de l'eau à traiter, ces moyens étant choisis parmi une cuve d'ozonation située en amont de ladite zone de traitement par adsorption, des lampes UV et des moyens d'injection d'un oxydant chimique en amont ou dans la zone de traitement par adsorption,

Ainsi, l'installation selon l'invention permet d'ajuster la quantité de réactifs adsorbants, et éventuellement d'oxydant chimique, à injecter dans l'eau à traiter/ dans l'eau traitée en fonction de son niveau de pollution par des composés perturbateurs endocriniens et/ou toxiques et/ou génotoxiques. Elle permet également d'évaluer l'efficacité du procédé mis en oeuvre en sortie de l'installation sur l'eau traitée.

Lesdits moyens d'ajustement ajustent la quantité de réactif adsorbant mélangée à ladite eau à traiter en fonction de ladite valeur obtenue par lesdits moyens d'évaluation résultant de la mise en contact de ladite eau à traiter avec ledit organisme vivant.

Ce mode de réalisation permet d'ajuster la quantité de réactifs adsorbants de manière très précise à la quantité de composés polluants dans l'eau entrante. Ainsi, le traitement de l'eau est plus efficace tout en supprimant le gaspillage en réactifs dicté par le principe de précaution lorsque l'eau est peu polluée.

L'installation comprend des moyens de contrôle de la qualité de ladite eau traitée, lesdits moyens de contrôle comprenant des moyens de détermination d'une information représentative de la qualité de ladite eau traitée en fonction de ladite valeur obtenue par lesdits moyens d'évaluation résultant de la mise en contact de ladite eau traitée avec ledit organisme vivant.

Cette caractéristique permet d'une part de mettre en place une boucle d'ajustement et de régulation de la quantité de réactifs adsorbants à injecter dans l'eau à traiter en fonction de la qualité de l'eau traitée, c'est à dire en sortie de l'installation. Elle permet également d'évaluer l'efficacité du procédé mis en oeuvre et de récolter des données utiles pour la compréhension des polluants présents dans les eaux et leur impact sur la santé et l'environnement. Elle permet également de vérifier que l'eau en sortie présente une qualité acceptable pour sa distribution dans l'environnement et éventuellement sa réutilisation.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un synoptique d'un mode de réalisation d'une installation pour la mise en oeuvre du procédé selon l'invention.
- la figure 2 présente un synoptique d'un autre mode de réalisation d'une installation pour la mise en oeuvre du procédé selon l'invention.
- la figure 3 est un graphique présentant les résultats d'essais de calibrage du procédé selon l'invention sur la mesure d'hormones oestrogéniques.

### 6. Exemples

Le principe général de l'invention repose sur l'utilisation d'organismes vivants, aquatiques et génétiquement modifiés, capables de détecter la présence d'un composé perturbateur endocrinien et/ou toxique et/ou génotoxique, quelque soit sa concentration dans l'eau. La détection de cette pollution et sa quantification permet d'ajuster très rapidement les performances du procédé de traitement de l'eau et notamment la quantité de réactifs adsorbants, et éventuellement oxydants, injectés dans l'eau à traiter, en fonction de la qualité de l'eau entrant dans l'installation. Ce procédé permet donc dans un premier temps de réaliser d'importantes économies sur la quantité de réactifs mis en oeuvre et de produire une eau de meilleure qualité. Il permet également de détecter la présence d'un composé nocif pour la santé de l'homme, des animaux ou l'environnement de manière rapide, précise et fiable. Il permet en outre de mieux comprendre le mécanisme d'action de ces composés sur les organismes vivants.

### 6.1. Description d'un premier mode de réalisation de l'invention

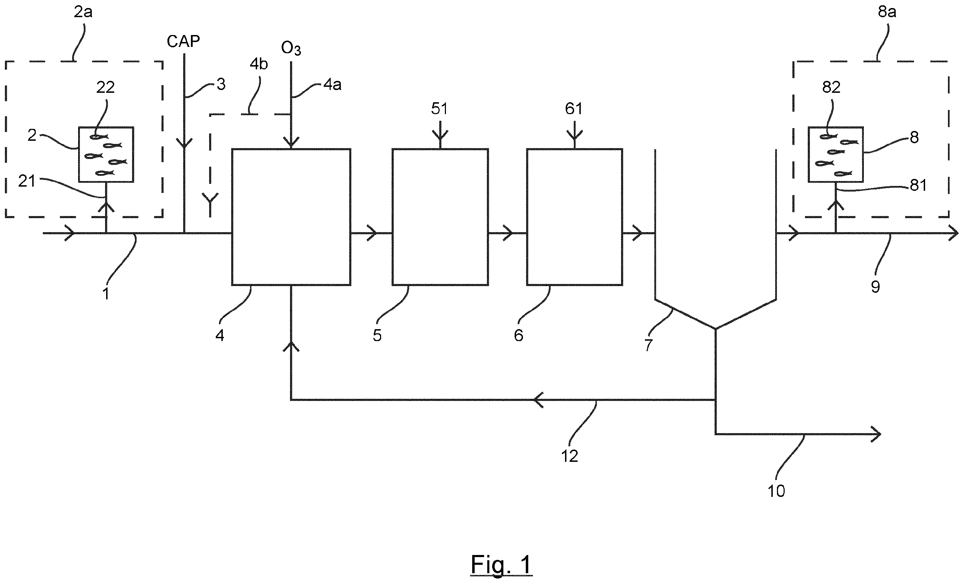

On présente, en relation avec la figure 1, un premier mode de réalisation d'une installation pour la mise en oeuvre du procédé selon l'invention.

L'eau à traiter entre dans une canalisation 1. Une partie de l'eau à traiter est déviée par une canalisation 21 vers une cellule d'analyse amont 2. La cellule d'analyse 2 comprend un bassin contenant l'eau à traiter dans lequel évoluent des embryons d'organismes aquatiques 22 comme des larves de batraciens ou des alevins de poissons génétiquement modifiés disponibles dans le commerce (OGM classe 1). Ces embryons 22 émettent une fluorescence lorsqu'ils se trouvent en contact avec un composé perturbateur endocrinien et/ou toxique et/ou génotoxique présent dans l'eau dans laquelle ils se trouvent. On notera que la cellule d'analyse amont 2 peut être isolée par une enceinte de confinement 2a (figurant en ligne pointillée sur la figure 1) afin d'empêcher toute fuite de ces organismes génétiquement modifiés vers l'extérieur. De préférence, l'intensité de la fluorescence émise par ces organismes aquatiques est proportionnelle à la quantité de composés perturbateurs endocriniens et/ou toxiques et/ou génotoxiques.

La cellule 2 comprend également un capteur capable de mesurer la fluorescence émise par les embryons 22. La mesure obtenue est intégrée par un système de régulation (non représenté).

Une quantité de réactif adsorbant approprié pour le traitement de l'eau en vue d'en diminuer la teneur en composés perturbateurs endocriniens et/ou toxiques et/ou génotoxiques, et qui est dans le présent mode de réalisation du charbon actif en poudre (CAP) est introduite dans l'eau à traiter. Cette injection de réactif adsorbant est effectuée, dans le mode de réalisation ici décrit, grâce à une canalisation 3 prévue en amont d'une cuve d'adsorption 4 pourvue de moyens d'agitation (non représentés). On notera que dans d'autres modes de réalisation, cette injection pourra être effectuée directement dans la cuve 4.

Dans cette cuve d'adsorption 4 l'eau est mise en contact avec le réactif adsorbant pendant une durée d'environ 10 minutes. Cette étape d'adsorption est préférentiellement couplée à une étape d'oxydation. Dans le cadre du mode de réalisation décrit, l'oxydation couplée est effectuée par une injection d'ozone qui peut se faire soit directement dans la cuve 4 par une canalisation 4a reliés à des diffuseurs (non représentés), soit par une injection en ligne en amont de la cuve 4 grâce à une canalisation 4b (représentée en ligne pointillée sur la figure 1) et à l'aide d'un mélangeur statique (non représenté).

Cette étape d'adsorption permet de fixer une grande partie des composés organiques ayant possiblement un effet perturbateur endocrinien et/ou toxique et/ou génotoxique sur les particules de réactif adsorbant. Elle permet en sus d'éliminer un résiduel d'oxydant pouvant être néfaste à la vie et au développement des embryons.

Après l'étape d'adsorption, l'eau subit une étape de coagulation dans une cuve 5 dans laquelle on injecte un coagulant 51, puis une étape de floculation dans une cuve 6 dans laquelle on injecte un floculant 61. Ces étapes sont menées selon toute méthode bien connue de l'homme de l'art. L'eau est ensuite amenée vers un système de séparation solide- liquide comme un décanteur lamellaire 7 qui permet de séparer l'eau clarifiée et traitée 9 des boues de décantation 10. On notera que l'on pourra utiliser tout type de système de séparation liquide-solide tel qu'un système de filtration de préférence granulaire ou mécanique.

Les boues contenant le réactif adsorbant sont en grandes parties renvoyées dans la cuve 4 par la canalisation 12. Ceci permet le recyclage d'une grande partie du réactif adsorbant ce qui contribue à diminuer les coûts du procédé. La partie des boues extraite par la canalisation 10 est quant à elle envoyée soit préférentiellement vers une étape de trainement biologique des eaux soit vers un traitement des boues.

Une partie de l'eau clarifiée 9 est prélevée et amenée en continu vers la cellule 8 dont la structure est identique à la cellule 2 et qui peut également être protégée par une enceinte de confinement 8a : elle comprend également une cuve contenant des embryons d'organismes aquatiques 82 génétiquement modifiés (OGM classe 1) de façon à émettre une fluorescence lorsqu'ils entrent en contact avec un polluant perturbateur endocrinien et/ou toxique et/ou génotoxique. Les embryons 82 sont de préférence de même espèce que les embryons 22. La cellule 8 comprend également un capteur capable de mesurer la fluorescence émise par les embryons 82. La mesure obtenue est intégrée par le système de régulation (non représenté).

Le système de régulation calcule en permanence ou régulièrement le taux d'abattement de la fluorescence grâce aux mesures effectuées par les capteurs des cellules 2 et 8. Ce taux traduit le taux d'abattement de la concentration en composés ayant un effet toxique, génotoxique ou perturbateur endocrinien de manière prédictive.

Le système de régulation compare la fluorescence mesurée grâce à la cellule 8 à une valeur seuil de fluorescence de référence correspondant à une concentration en de tels composés au-delà de laquelle un impact physiologique peut être observée. Lorsque le système de régulation détecte que la fluorescence mesurée grâce à la cellule 8 est égale ou supérieure à la valeur seuil de référence, une distribution d'une quantité de réactif adsorbant neuf est déclenchée quasi immédiatement pour augmenter la concentration de réactif adsorbant dans l'eau à traiter.

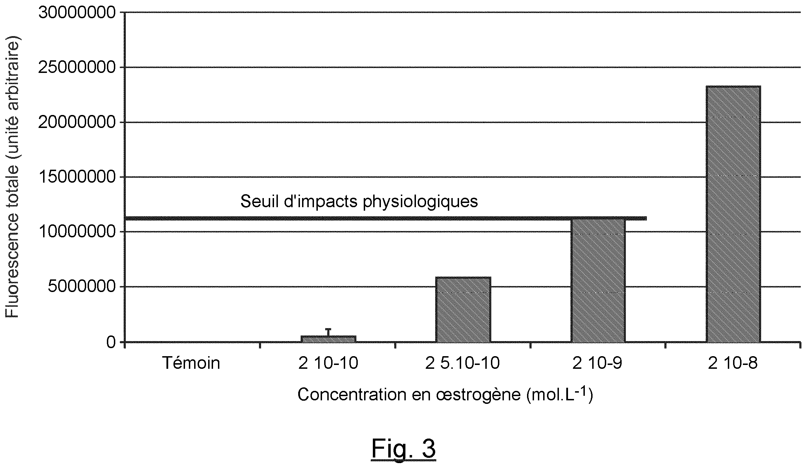

Les cellules 2 et 8 fournissent des résultats d'intensité de fluorescence mesurée. Ces intensités sont mises en relation avec la quantité de réactif adsorbant à injecter dans l'eau à traiter selon une simple loi dose-réponse, tel que cela est représenté à la figure 3. En fonction des observations faites sur les embryons d'organismes aquatiques, il est possible de déterminer un seuil de fluorescence à partir duquel on constate un état pathologique ou des effets délétères avérés sur le développement des embryons. Ces effets peuvent être diverses : malformations, mortalité des embryons, perturbation de la réversion sexuée, ralentissement de la croissance....Cette meilleure compréhension de la toxicité des composés présents dans l'eau n'était pas permise avec les méthodes de l'art antérieur.

### 6.2. Description d'un second mode de réalisation de l'invention

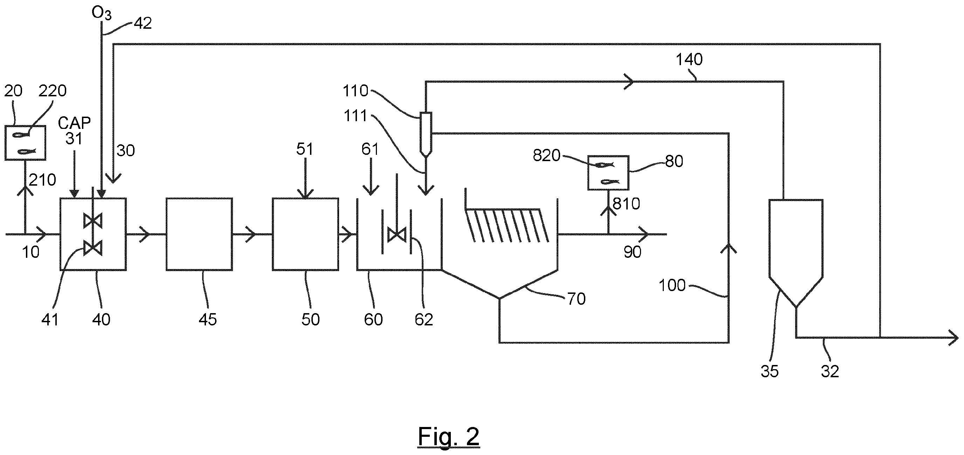

On présente en relation avec la figure 2 un second mode de réalisation de l'invention.

L'eau à traiter entre dans une canalisation 10. Une partie de l'eau à traiter est déviée par une canalisation 210 vers une cellule d'analyse amont 20. La cellule d'analyse 20 comprend un bassin contenant l'eau à traiter dans lequel évoluent des embryons d'organismes aquatiques 220 comme des larves de batraciens ou des alevins de poissons génétiquement modifiés. Cette cellule est également pourvue de moyens de détection de la fluorescence, tel qu'un capteur, permettant de détecter, mesurer et enregistrer la fluorescence émise par les embryons 220. Ces moyens de détection sont raccordés à un système de régulation (non représenté).

L'eau à traiter 10 entre ensuite dans une cuve d'adsorption 40 pourvue de moyens d'agitation 41 dite cuve de pré-contact pour être mise en contact avec le réactif adsorbant, ici du CAP, qui est principalement du réactif adsorbant usité 30 avec en complément en tant que de besoin du réactif adsorbant neuf 31.

Cette étape d'adsorption est préférentiellement couplée à une étape d'oxydation. Dans le cadre du mode de réalisation décrit, l'oxydation couplée est effectuée par une injection d'ozone directement dans la cuve 40 par une canalisation 42. Dans un autre mode de réalisation, l'injection d'oxydant pourra être effectuée par une injection en ligne en amont de la cuve 40.

Cette étape de pré-contact peut se poursuivre, si nécessaire, dans une cuve de mélange 45 avant de subir une étape de coagulation qui peut s'effectuer à l'aide d'un mélangeur statique 50 (ou une cuve agitée) et dans lequel est injecté un réactif coagulant 51. Il est à noter que la présence de la cuve de mélange 45 entre la cuve de pré-contact 40 et le mélangeur statique 50 est optionnelle. L'eau coagulée est acheminée dans un bassin de floculation 60, dans lequel est injecté du floculant 61, contenant un guide flux 62. Simultanément est injecté un lest 110, qui peut être du microsable ou tout autre matériau lestant. Cette méthode est connue sous le nom de floculation décantation à flocs lestés.

L'eau est ensuite amenée vers un décanteur lamellaire 70 permettant de séparer l'eau clarifiée et traitée 90 des boues 100. Ces boues 100 après avoir été envoyés vers un ouvrage de séparation du lest des boues, ici un hydrocyclone 110, subissent ensuite un épaississement 35. Les boues ainsi épaissies 32 sont séparées en deux parties : la majeure partie contenant le réactif adsorbant 30 est retournée en tête de l'installation, dans la cuve de pré contact 40. La partie des boues extraites 32 est envoyée soit préférentiellement vers une étape de trainement biologique des eaux soit vers un traitement des boues.

Le lest récupéré en sortie de l'hydrocyclone est quant à lui injecté à nouveau au niveau du guide-flux présent dans le bassin de floculation 60.

Une partie de l'eau clarifiée 90 est prélevée et amenée en continu vers la cellule 80 dont la structure est identique à la cellule 20.

Un système de régulation (non représenté) intègre les signaux émis par les moyens de détection de la fluorescence mesurée sur l'eau à traiter et sur l'eau traitée, calcule le taux d'abattement de la fluorescence, le compare à un taux d'abattement de référence et déclenche une distribution d'une quantité de CAP neuf si le taux d'abattement observé est inférieur au taux de référence. En fonction des signaux émis et du calibrage du procédé, le système de régulation peut ainsi modifier la quantité de réactifs adsorbant à injecter, notamment en ce qui concerne le réactif neuf 31 afin de ne pas gaspiller inutilement de réactif adsorbant.

### 6.3. Essai de calibrage

Un essai de calibrage d'une installation pour la mise en oeuvre du procédé selon l'invention a été réalisé dans le but de déterminer une valeur seuil en perturbateurs endocriniens acceptable dans l'eau traitée. Cet essai de calibrage permet également de discriminer la fluorescence naturelle de l'eau et la fluorescence basale des organismes aquatiques génétiquement modifiés, lié au fonctionnement normal des gènes, de la fluorescence émise par ces mêmes organismes lorsqu'ils détectent la présence d'un polluant perturbateur endocrinien et/ou toxique et/ou génotoxique. La fluorescence de l'eau et la fluorescence basale des organismes aquatiques génétiquement modifiés sont assimilables à un bruit de fond qu'il est nécessaire d'évaluer afin de le retrancher du signal mesuré en présence d'un polluant.

Le perturbateur choisi comme exemple est l'oestrogène, qu'on retrouve dans les eaux usées urbaines. Plus précisément, des larves de batraciens génétiquement modifiées sont mises en présence avec des concentrations connues et croissantes en oestrogène, afin de déterminer la concentration maximale acceptable dans l'eau traitée et n'entrainant aucun effet physiologique sur les larves. Ces concentrations ont été mises en relation avec les intensités de fluorescence mesurées. Ces résultats sont présentés à la figure 3.

Bien entendu on peut utiliser à la place de l'oestrogène comme perturbateur tout autre molécule ayant un impact sur l'axe hormonal oestrogénique. De la même manière, on peut utiliser toute autre molécule ayant un impact thyroïdien.

On constate à la lecture de ce graphique que les larves de batraciens sont sensibles à de très faibles doses d'oestrogène comme l'éthinyl-oestradiol (EE2) (2,5 ×10⁻¹⁰ mol/L) et émettent une intensité de fluorescence détectable et quantifiable. On constate que la concentration en oestrogène conduit à une réversion physiologique à partir de 2×10⁻⁹ mol/L. Cette concentration est mise en relation avec l'intensité de fluorescence mesurée. L'intensité de fluorescence correspondante peut donc être enregistrée comme la valeur seuil prédéterminée qui déclenchera une régulation de la quantité de réactif adsorbant injecté dans l'eau à traiter.

### 6.4. Performance du procédé selon l'invention sans injection d'ozone

Les performances du procédé selon l'invention a été évalué pour le traitement d'eaux usées municipales par le prélèvement régulier d'échantillons d'eau traitée, en sortie d'installation, sur une période de 6 mois. Le réactif adsorbant mis en oeuvre pour l'étape d'adsorption est la poudre de charbon actif en poudre de chez Norit® à une concentration de 10 ppm. Le coagulant utilisé est le chlorure de fer FeCl₃ à une concentration comprise entre 4-5 mg/L exprimé en Fe.

Les performances du procédé de traitement de l'eau sont résumées dans le tableau 1 ci -dessous :

**Tableau 1 - Qualité de l'eau traitée en sortie de l'invention**

| Paramètres | Moyenne des mesures (mg/L) | Maximum mesuré (mg/L) |
|---|---|---|
| Matière en Suspension | <3 | <5 |
| Demande Chimique en Oxygène | 12.6 | 20 |
| Carbone Organique Total | 3,4 | 6.2 |
| Phosphore Total | <0,1 | <0,2 |

D'après le tableau 1, le procédé selon l'invention permet d'obtenir une eau de bonne qualité, claire et adaptée à la vie aquatique des embryons précédemment cités.

Les performances du procédé selon l'invention à éliminer les perturbateurs endocriniens ont également été évaluées. Plusieurs molécules connues pour leur rôle nocif sur la santé, comme l'atenolol, le benzotriazole, l'hydrochlorothiazide, le benzafibrate, la carbamazépine, la clarithromycine, le diclofénac, le trimethoprime, la venlafaxine, le métoprolol, le methyl-benzotriazol, l'acide méfénamique et la primidone,ont été recherchées et mesurées dans l'eau à traiter et l'eau traitée. A l'exception du benzotriazole qui est un agent corrosif, les autres substances sont des perturbateurs endocriniens connus et communément recherchés lors d'analyses en laboratoire.

Les performances d'élimination sont supérieures à 75 % pour l'atenolol, le bentriazole et l'hydrochlorothiazole et supérieures à 80% pour les autres molécules. Ces résultats prouvent l'efficacité du procédé selon l'invention à éliminer les polluants pertubrateurs endocriniens et/ou toxiques et/ou génotoxiques de l'eau.

On notera que des résultats similaires ont été obtenus grâce aux installations représentées à la figure 1 et à la figure 2.

### 6.5. Performance du procédé selon l'invention avec injection d'ozone

Les performances du procédé selon l'invention, avec injection d'ozone, a été évaluées pour le traitement d'eaux usées municipales par le prélèvement régulier de 65 échantillons d'eau traitée, en sortie d'installation, sur une période de 6 mois (de juin à décembre). Le réactif adsorbant mis en oeuvre pour l'étape d'adsorption est du charbon actif en poudre de chez Norit® à une concentration de 10 ppm. Le coagulant utilisé est le chlorure de fer FeCl₃ à une concentration comprise entre 4-5 mg/L exprimé en Fe. L'oxydant utilisé dans ce cas est de l'ozone et a été injecté au niveau de la cuve de contact à des doses de 1 à 2 mg/l.

Les performances du procédé selon l'invention avec injection d'ozone à éliminer les perturbateurs endocriniens ont été évaluées. Sept molécules connues pour leur rôle nocif sur la santé ont été recherchées et mesurées dans l'eau à traiter et l'eau traitée. A l'exception du benzotriazole qui est un agent corrosif, les autres substances sont des perturbateurs endocriniens connus et communément recherchés lors d'analyses en laboratoire. Les résultats de ces analyses sont résumés dans le tableau 2 ci-dessous :

**Tableau 2 - Elimination de perturbateurs endocriniens et d'agent toxique par le procédé selon l'invention.**

| Substance | Concentration dans l'eau à traiter (µg/L) | Concentration dans l'eau traitée (µg/L) | Pourcentage d'élimination (%) |
|---|---|---|---|
| Diclofénac | 1,093 | 0,034 | 97 |
| Carbamazépine | 1,288 | 0,014 | 99 |
| Hydochlorothiazide | 3,658 | 0,146 | 95 |
| Metoprolol | 0,05 | 0,01 | 76 |
| Sulfamethaxole | 0,256 | 0,03 | 88 |
| Atenolol | 0,142 | 0,018 | 82 |
| Benzotriazole | 11,075 | 0,301 | 97 |

Des résultats similaires ont été obtenus grâce aux installations représentées à la figure 1 et à la figure 2.

D'après les résultats de ces essais, le procédé selon l'invention permet de diminuer la teneur en composés perturbateurs endocriniens et/ou toxiques et/ou génotoxiques de manière particulièrement efficace car les pourcentages d'élimination de ces substances dépassent, dans leur globalité, la valeur de 80%.

Ainsi le procédé selon l'invention permet de produire une eau ne présentant aucun danger pour l'environnement apte à subir ensuite des traitements ultérieurs.

### 7. Variantes

Dans une variante de l'installation seule la cellule 8 est mise en oeuvre : la régulation de la quantité de réactif adsorbant est alors effectuée par une boucle d'ajustement et de régulation permettant d'ajuster la quantité de réactifs adsorbant et oxydant injectés dans l'eau à traiter en fonction de la à la qualité de l'eau analysée en sortie. Cette alternative permet de détecter et pallier un éventuel dysfonctionnement de l'installation.

Dans une autre variante, seule la cellule 2 est mise en oeuvre : la quantité de réactif adsorbant est alors régulée uniquement en fonction de la qualité de l'eau entrante, ce qui permet d'adapter le procédé de traitement de l'eau aux variations de la qualité de l'eau à traiter.

## Revendications

1. Procédé de traitement d'eau à traiter en vue d'en réduire la teneur en polluants susceptibles d'induire un effet perturbateur endocrinien et/ou un effet toxique et/ou génotoxique, ledit procédé comprenant :
- une étape d'adsorption comprenant une mise en contact de ladite eau à traiter avec une quantité d'au moins un réactif adsorbant produisant un mélange d'eau et de réactif adsorbant ;
- une étape de séparation liquide-solide dudit mélange produisant de l'eau traitée et des boues ;
**caractérisé en ce que** ladite étape d'adsorption est précédée et/ou ladite étape de séparation liquide-solide est suivie d'une étape de mise en contact de ladite eau à traiter et/ou de ladite eau traitée respectivement avec au moins un organisme aquatique vivant, ledit organisme aquatique vivant étant un organisme aquatique génétiquement modifié se trouvant à l'état embryonnaire et appartenant au groupe comprenant les poissons et les amphibiens ; et
**en ce que** la valeur d'au moins une propriété dudit organisme vivant étant corrélée à la concentration en lesdits polluants de ladite eau à traiter et/ou de ladite eau traitée, ladite propriété étant un signal visuel de fluorescence émis par ledit organisme vivant dont l'intensité est quantifiable et corrélée à la concentration de ladite eau à traiter en lesdits polluants ;
ledit procédé comprenant en outre :
- une étape d'évaluation en continu de la valeur de ladite propriété par mesure de la fluorescence émise par les organismes vivants aquatiques;
- une étape d'ajustement de la quantité de réactif adsorbant mélangé à l'eau au cours de ladite étape d'adsorption en fonction de ladite valeur obtenue à ladite étape d'évaluation.

2. Procédé selon la revendication 1 **caractérisé en ce qu'**il comprend en outre une étape d'oxydation chimique dans laquelle l'injection d'un oxydant chimique se fait en amont ou au cours de l'étape d'adsorption.

3. Procédé selon la revendication 1 ou 2, **caractérisé en ce que** la quantité de réactif adsorbant mélangée à l'eau au cours de ladite étape d'adsorption est proportionnelle à ladite valeur obtenue à ladite étape d'évaluation.

4. Procédé selon l'une des revendications 1 à 3, **caractérisé en ce que** l'injection dudit réactif adsorbant dans ladite eau à traiter est déclenchée lorsque ladite valeur obtenue à ladite étape d'évaluation devient supérieure ou égale à un seuil prédéterminé.

5. Procédé selon l'une quelconque des revendications 1 à 4, **caractérisé en ce que** ladite étape d'ajustement de la quantité de réactif adsorbant mélangé à l'eau au cours de ladite étape d'adsorption est réalisée en fonction de ladite valeur obtenue à ladite étape d'évaluation résultant de la mise en contact de ladite eau à traiter avec ledit organisme vivant.

6. Procédé selon l'une quelconque des revendications 1 à 5, **caractérisé en ce qu'**il comprend une étape de contrôle de la qualité de ladite eau traitée produite, ladite étape de contrôle comprenant une sous-étape de détermination d'une information représentative de la qualité de ladite eau traitée en fonction de ladite valeur obtenue à ladite étape d'évaluation résultant de la mise en contact de ladite eau traitée avec ledit organisme vivant.

7. Procédé selon l'une quelconque des revendications 1 à 6, **caractérisé en ce que** ladite ou lesdites étapes d'évaluation sont mises en oeuvre *in situ.*

## Patentansprüche

1. Verfahren zur Aufbereitung von aufzubereitendem Wasser im Hinblick darauf, dessen Gehalt an Schadstoffen zu reduzieren, die eine endokrinschädliche Wirkung und/oder eine toxische und/oder genotoxische Wirkung hervorrufen können, wobei das Verfahren umfasst:
- einen Adsorptionsschritt, der ein Kontaktieren des aufzubereitenden Wassers mit einer Menge von mindestens einem adsorbierenden Reagenzmittel umfasst, der ein Gemisch aus Wasser und aus adsorbierendem Reagenzmittel erzeugt;
- einen Schritt der Flüssigkeit-Feststoff-Trennung des Gemischs, der aufbereitetes Wasser und Schlämme erzeugt;
**dadurch gekennzeichnet, dass** dem Adsorptionsschritt ein Schritt vorausgeht, und/oder dem Flüssigkeit-Feststoff-Trennschritt folgt, des Kontaktierens von jeweils dem aufzubereitenden Wasser und/oder dem aufbereiteten Wasser mit mindestens einem lebenden Wasserorganismus, wobei der lebende Wasserorganismus ein genetisch modifizierter Wasserorganismus ist, der sich im Embryonalstadium befindet und zu der Gruppe gehört, die die Fische und die Amphibien umfasst; und
dadurch, dass der Wert von mindestens einer Eigenschaft des lebenden Organismus mit der Konzentration an den Schadstoffen des aufzubereitenden Wassers und/oder des aufbereiteten Wassers korreliert,
wobei die Eigenschaft ein von dem lebenden Organismus emittiertes, sichtbares Fluoreszenzsignal ist, dessen Intensität quantifizierbar ist und mit der Konzentration des aufzubereitenden Wassers an den Schadstoffen korreliert;
wobei das Verfahren weiter umfasst:
- einen Schritt des kontinuierlichen Auswertens des Werts der Eigenschaft durch Messung der Fluoreszenz, die von den lebenden Wasserorganismen emittiert wird;
- einen Schritt des Anpassens der Menge an adsorbierendem Reagenzmittel, das dem Wasser im Laufe des Adsorptionsschritts zugemischt wird, in Abhängigkeit von dem im Auswerteschritt erhaltenen Wert.

2. Verfahren nach Anspruch 1, **dadurch gekennzeichnet, dass** es weiter einen Schritt der chemischen Oxidation umfasst, bei dem die Einspritzung eines chemischen Oxidationsmittels stromaufwärts oder im Laufe des Adsorptionsschritts erfolgt.

3. Verfahren nach Anspruch 1 oder 2, **dadurch gekennzeichnet, dass** die Menge an adsorbierendem Reagenzmittel, die dem Wasser im Laufe des Adsorptionsschritts zugemischt wird, zu dem im Auswerteschritt erhaltenen Wert proportional ist.

4. Verfahren nach einem der Ansprüche 1 bis 3, **dadurch gekennzeichnet, dass** das Einspritzen des adsorbierenden Reagenzmittels in das aufzubereitende Wasser ausgelöst wird, wenn der im Auswerteschritt erhaltene Wert größer oder gleich einer vorbestimmten Schwelle wird.

5. Verfahren nach einem der Ansprüche 1 bis 4, **dadurch gekennzeichnet, dass** der Schritt des Anpassens der Menge an adsorbierendem Reagenzmittel, das dem Wasser im Laufe des Adsorptionsschritts zugemischt wird, in Abhängigkeit von dem im Auswerteschritt erhaltenen Wert ausgeführt wird, der aus dem Kontaktieren des aufzubereitenden Wassers mit dem lebenden Organismus resultiert.

6. Verfahren nach einem der Ansprüche 1 bis 5, **dadurch gekennzeichnet, dass** es einen Schritt des Kontrollierens der Qualität des erzeugten aufbereiteten Wassers umfasst, wobei der Kontrollschritt einen Teilschritt des Bestimmens einer Information umfasst, die für die Qualität des aufbereiteten Wassers repräsentativ ist, in Abhängigkeit von dem im Auswerteschritt erhaltenen Wert, der aus dem Kontaktieren des aufbereiteten Wassers mit dem lebenden Organismus resultiert.

7. Verfahren nach einem der Ansprüche 1 bis 6, **dadurch gekennzeichnet, dass** der oder die Auswerteschritte *in situ* umgesetzt werden.

## Claims

1. Method for treating water to be treated in order to reduce its content in pollutants liable to introduce an adverse endocrine effect and/or a toxic and/or genotoxic effect, said method comprising:
- a step of adsorption in which said water to be treated is brought into contact with a quantity of at least one adsorbent reagent producing a mixture of water and adsorbent reagent;
- a step of liquid-solid separation of said mixture producing treated water and sludges;
**characterized in that** said step of adsorption is preceded and/or said step of liquid-solid separation is followed by a step for bringing said water to be treated and/or said treated water respectively into contact with at least one living aquatic organism, said living aquatic organism being a genetically modified aquatic organism in the embryonic state and belonging to the group comprising fish and amphibians; and
**in that** the value of at least one property of said living organism being correlated with a concentration in said pollutants of said water to be treated and/or said treated water, said property being a visual fluorescent signal emitted by said living organism, the intensity of which is quantifiable and correlated with the concentration of said water to be treated in said pollutants ;
said method further comprising:
- a step for continuously evaluating the value of said property by measurement of the fluorescence emitted by the aquatic living organisms;
- a step for adjusting the quantity of adsorbent reagent mixed into the water during said step of adsorption as a function of said value obtained at said step for evaluating.

2. Method according to claim 1 **characterized in that** it further comprises a step of chemical oxidation in which the injection of a chemical oxidant is done upstream to or during the adsorption step.

3. Method according to claim 1 or 2, **characterized in that** the quantity of adsorbent agent mixed with water during said step of adsorption is proportional to said value obtained at said step for evaluating.

4. Method according to any one of the claims 1 to 3, **characterized in that** the injection of said adsorbent reagent into said water to be treated is activated when said value obtained at said step for evaluating becomes greater than or equal to a predetermined threshold.

5. Method according to any one of the claims 1 to 4, **characterized in that** said step for adjusting the quantity of adsorbent reagent mixed with water during said step of adsorption is performed as a function of said value obtained at said step for evaluating resulting from the bringing of said water to be treated into contact with said living organism.

6. Method according to any one of the claims 1 to 5, **characterized in that** it comprises a step for controlling the quality of said treated water produced, said step for controlling comprising a sub-step for determining a piece of information representing the quality of said treated water as a function of said value obtained at said step for evaluating resulting from the bringing of said treated water into contact with said living organism.

7. Method according to any one of the claims 1 to 6, **characterized in that** said step or steps for evaluating are implemented *in situ.*
